(19)

Europäisches
Patentamt
European
Patent Office
Office européen
des brevets

(11) **EP 4 615 154 A1**

(12) **EUROPEAN PATENT APPLICATION**
published in accordance with Art. 153(4) EPC

(43) Date of publication:
**10.09.2025 Bulletin 2025/37**

(21) Application number: **23886150.4**

(22) Date of filing: **27.10.2023**

(51) International Patent Classification (IPC):
**H04W 76/28** (2018.01)     **H04W 72/23** (2023.01)
**H04W 52/02** (2009.01)     **H04L 1/18** (2023.01)

(52) Cooperative Patent Classification (CPC):
**H04L 1/18; H04W 52/02; H04W 72/23; H04W 76/28**

(86) International application number:
**PCT/KR2023/016903**

(87) International publication number:
**WO 2024/096454 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.11.2022 US 202263423034 P**

(71) Applicant: **LG Electronics Inc.
Yeongdeungpo-gu
Seoul 07336 (KR)**

(72) Inventors:
• **HWANG, Seunggye
Seoul 06772 (KR)**

• **KIM, Jaehyung
Seoul 06772 (KR)**
• **LEE, Youngdae
Seoul 06772 (KR)**
• **YANG, Suckchel
Seoul 06772 (KR)**
• **KIM, Seonwook
Seoul 06772 (KR)**
• **LEE, Sunghoon
Seoul 06772 (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(54) **METHOD AND DEVICE FOR TRANSMITTING/RECEIVING WIRELESS SIGNAL IN WIRELESS COMMUNICATION SYSTEM**

(57)     A method by which a terminal receives a signal in a wireless communication system, according to one embodiment of the present disclosure, comprises the steps of: receiving a discontinuous reception (DRX) configuration including information about an on-duration timer, monitoring a first physical downlink control channel (PDCCH) on the basis of the running of the on-duration timer, and starting an inactivity timer on the basis of downlink control information (DCI) detected through the monitoring of the first PDCCH, wherein the inactivity timer expires before the on-duration timer, and the terminal can determine, on the basis of the DCI, whether to monitor a second PDCCH following the first PDCCH from a first point, at which the inactivity timer expires, up to a second point at which the on-duration timer expires.

**FIG. 18**

Transmit DRX configuration — C05

Transmit DCI through first PDCCH — C10

Determine whether to transmit second PDCCH after inactivity timer expires — C15

**Description**

**TECHNICAL FIELD**

The present disclosure relates to a wireless communication system, and more particularly, to a method and apparatus for transmitting and receiving a wireless signal.

**BACKGROUND**

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

**DISCLOSURE**

**TECHNICAL PROBLEM**

An object of the present disclosure is to provide a method and apparatus for efficiently performing a wireless signal transmission/reception procedure.

Other technical objects may be derived from embodiments disclosed in the detailed description.

**TECHNICAL SOLUTION**

In an aspect of the present disclosure, provided herein is a method of receiving a signal by a user equipment (UE) in a wireless communication system. The method includes: receiving a discontinuous reception (DRX) configuration comprising information regarding an on-duration timer; monitoring a first physical downlink control channel (PDCCH) based on running of the on-duration timer, and starting an inactivity timer based on downlink control information (DCI) detected through the monitoring of the first PDCCH. The inactivity timer may expire earlier than the on-duration timer. Based on the DCI, the UE may determine whether to monitor a second PDCCH subsequent to the first PDCCH from a first time point at which the inactivity timer expires to a second time point at which the on-duration timer expires.

Based on that first information included in the DCI is set to a first value, the UE may terminate the on-duration timer early at the first time point.

Based on that first information included in the DCI is set to a first value, the UE may skip monitoring the second PDCCH from the first time point to the second time point.

Based on that first information included in the DCI is set to a second value, the UE may monitor the second PDCCH from the first time point to the second time point.

The DCI may include information regarding a length of the inactivity timer.

The length of the inactivity timer may be a duration from a time point of receiving the DCI to the first time point.

Based on at least one of a DCI format, a radio network temporary identifier (RNTI), or a search space set group (SSSG), which are related to the DCI, the UE may determine whether to monitor the second PDCCH from the first time point to the second time point.

The UE may receive information regarding the at least one of the DCI format, the RNTI, or the SSSG, which are related to whether the second PDCCH is to be monitored, through radio resource control (RRC) signaling.

Based on a hybrid automatic repeat request (HARQ) process number field included in the DCI, the UE may determine at least one of the length of the inactivity timer and whether to monitor the second PDCCH.

In another aspect of the present disclosure, provided herein is a computer-readable recording medium having recorded thereon a program for the above-described signal reception method.

In another aspect of the present disclosure, provided herein is a UE configured to perform the above-described signal reception method.

In another aspect of the present disclosure, provided herein is a device configured to control the UE performing the above-described signal reception method.

In another aspect of the present disclosure, provided herein is a method of transmitting a signal by a base station (BS) in a wireless communication system. The method includes: transmitting a DRX configuration comprising information regarding an on-duration timer to a UE; and transmitting DCI to the UE over a first PDCCH based on running of the on-duration timer. An inactivity timer may be started based on the transmission of the DCI. The inactivity timer may expire earlier than the on-duration timer. Whether a second PDCCH subsequent to the first PDCCH is to be transmitted from a first time point at which the inactivity timer expires to a second time point at which the on-duration timer expires may be determined based on the DCI.

In a further aspect of the present disclosure, provided herein is a BS configured to perform the above-described signal transmission method.

ADVANTAGEOUS EFFECTS

According to an embodiment, a signal may be transmitted/received more accurately and more efficiently in a wireless communication system.

Other technical effects may be derived from embodiments disclosed in the detailed description.

**BRIEF DESCRIPTION OF THE DRAWINGS**

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary physical downlink control channel (PDCCH) transmission and reception process.

FIG. 6 illustrates an exemplary physical downlink shared channel (PDSCH) reception and acknowledgement/negative acknowledgement (ACK/NACK) transmission process.

FIG. 7 illustrates an exemplary physical uplink shared channel (PUSCH) transmission process.

FIGS. 8 to 10 are diagrams illustrating a discontinuous reception related (DRX-related) operation.

FIG. 11 is a diagram illustrating a wake-up signal (WUS).

FIG. 12 illustrates an example of early termination of an on-duration timer (ODT).

FIG. 13 illustrates an example of providing information about an ODT control method through scheduling downlink control information (DCI).

FIG. 14 illustrates an example of providing information about an ODT control method through non-scheduling DCI.

FIG. 15 illustrates an example of providing information about an ODT control method by reusing hybrid automatic repeat request (HARQ) process number (HPN) field of DCI.

FIG. 16 is a diagram for explaining signal transmission and reception in a network system according to an embodiment.

FIG. 17 is a diagram for explaining signal reception of a user equipment (UE) according to an embodiment.

FIG. 18 is a diagram for explaining signal transmission of a base station (BS) according to an embodiment.

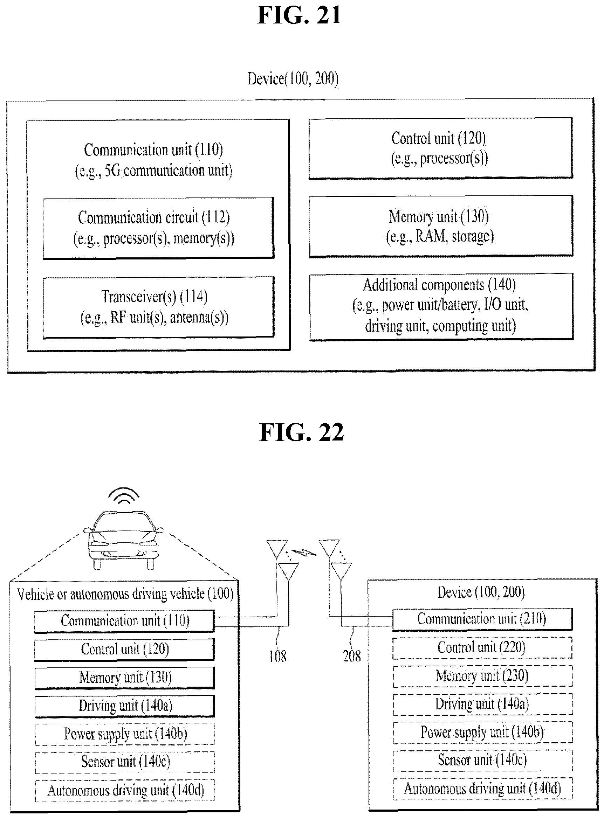

FIGS. 19 to 22 illustrate an example of a communication system 1 and wireless devices applicable to the present disclosure.

**DETAILED DESCRIPTION**

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA may be implemented as a radio technology such as Universal Terrestrial Radio Access (UTRA) or CDMA2000. TDMA may be implemented as a radio technology such as Global System for Mobile communications (GSM)/General Packet Radio Service (GPRS)/Enhanced Data Rates for GSM Evolution (EDGE). OFDMA may be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.304: User Equipment (UE) procedures in idle mode and in RRC Inactive state
- 38.321 Medium Access Control (MAC) protocol specification
- 38.331: Radio Resource Control (RRC) protocol specification
- 37.213: Introduction of channel access procedures to unlicensed spectrum for NR-based access

Terms and Abbreviations

- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG(Secondary Cell Group) Cell
- CA: Carrier Aggregation
- WUS: Wake up Signal
- ODT: On-Duration Timer
- IAT: Inactivity Timer
- HPN: HARQ Process Number
- SPS: Semi-Persistent Scheduling
- CG: Configured Grant
- SSSG: Search Space Set Group

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

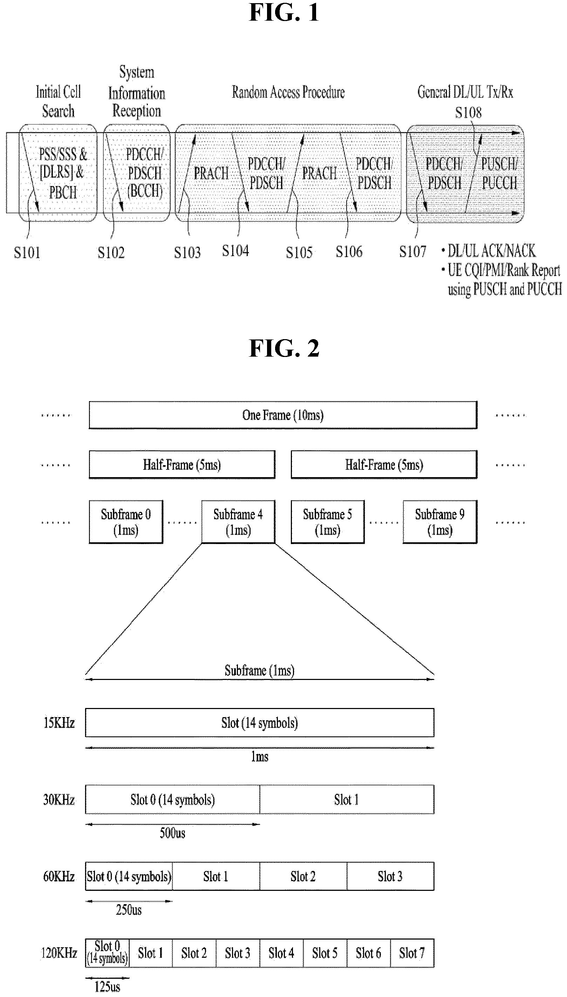

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a slot <br> * $N^{ftame,u}_{slot}$: Number of slots in a frame <br> * $N^{subftame,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

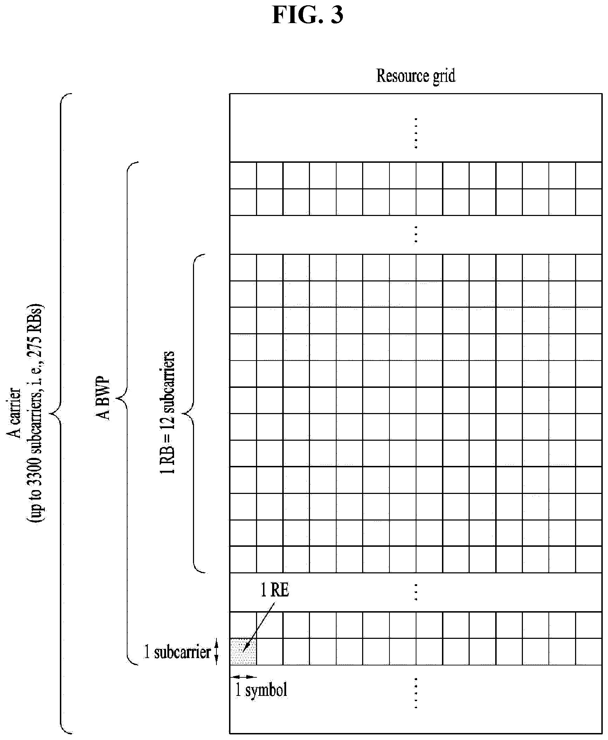

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

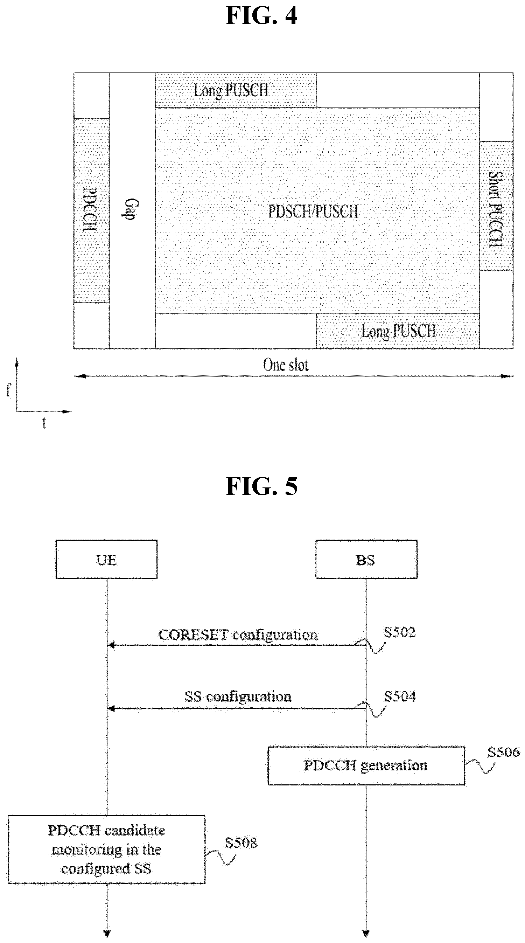

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDCCH transmission/reception process.

Referring to FIG. 5, a BS may transmit a control resource set (CORESET) configuration to a UE (S502). A CORESET is defined as a resource element group (REG) set having a given numerology (e.g., a subcarrier spacing (SCS), a cyclic prefix (CP) length, and so on). An REG is defined as one OFDM symbol by one (physical) resource block (P)RB. A plurality of CORESETs for one UE may overlap with each other in the time/frequency domain. A CORESET may be configured by system information (e.g., a master information block (MIB)) or higher-layer signaling (e.g., radio resource control (RRC) signaling). For example, configuration information about a specific common CORESET (e.g., CORESET #0) may be transmitted in the MIB. For example, a PDSCH carrying system information block 1 (SIB1) may be scheduled by a specific PDCCH, and CORESET #0 may be used to transmit the specific PDCCH. Further, configuration information about CORESET #N (e.g., N>0) may be transmitted by RRC signaling (e.g., cell-common RRC signaling, UE-specific RRC signaling, or the like). For example, the UE-specific RRC signaling carrying CORESET configuration information may include, but not limited to, various types of signaling such as an RRC setup message, an RRC reconfiguration message, and/or BWP configuration information. Specifically, a CORESET configuration may include the following information/-fields.

- controlResourceSetId: Indicates the ID of a CORESET.
- frequencyDomainResources: Indicates the frequency-domain resources of the CORESET. The resources are indicated by a bitmap in which each bit corresponds to an RB group (= 6 (consecutive) RBs). For example, the most significant bit (MSB) of the bitmap corresponds to a first RB group in a BWP. An RB group corresponding to a bit having a bit value of 1 is allocated as frequency-domain resources of the CORESET.
- duration: Indicates the time-domain resources of the CORESET. It indicates the number of consecutive OFDM symbols included in the CORESET. The duration has a value between 1 and 3.
- cce-REG-MappingType: Indicates a control channel element (CCE)-to-REG mapping type. An interleaved type and a non-interleaved type are supported.
- interleaverSize: Indicates an interleaver size.
- pdcch-DMRS-ScramblingID: Indicates a value used for PDCCH DMRS initialization. When pdcch-DMRS-ScramblingID is not included, the physical cell ID of a serving cell is used.

- precoderGranularity: Indicates a precoder granularity in the frequency domain.
- reg-BundleSize: Indicates an REG bundle size.
- tci-PresentInDCI: Indicates whether a transmission configuration index (TCI) field is included in DL-related DCI.
- tci-StatesPDCCH-ToAddList: Indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE (S504). The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. While a CORESET configuration and a PDCCH SS configuration are shown as separately signaled in FIG. 5, for convenience of description, the present disclosure is not limited thereto. For example, the CORESET configuration and the PDCCH SS configuration may be transmitted in one message (e.g., by one RRC signaling) or separately in different messages.

The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a UE-specific search space (USS) set or a common search space (CSS) set. For convenience, PDCCH SS set may be referred to as "SS" or "PDCCH SS".

A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.

- searchSpaceId: Indicates the ID of an SS.
- controlResourceSetId: Indicates a CORESET associated with the SS.
- monitoringSlotPeriodicityAndOffset: Indicates a periodicity (in slots) and offset (in slots) for PDCCH monitoring.
- monitoringSymbolsWithinSlot: Indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.
- nrofCandidates: Indicates the number of PDCCH candidates (one of values 0, 1, 2, 3, 4, 5, 6, and 8) for each AL where AL={1, 2, 4, 8, 16}.
- searchSpaceType: Indicates CSS or USS as well as a DCI format used in the corresponding SS type.

Subsequently, the BS may generate a PDCCH and transmit the PDCCH to the UE (S506), and the UE may monitor PDCCH candidates in one or more SSs to receive/detect the PDCCH (S508). An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

A CCE-to-REG mapping type is configured as one of an interleaved CCE-to-REG type and a non-interleaved CCE-to-REG type.

- Non-interleaved CCE-to-REG mapping (or localized CCE-to-REG mapping) (FIG. 5): 6 REGs for a given CCE are grouped into one REG bundle, and all of the REGs for the given CCE are contiguous. One REG bundle corresponds to one CCE.
- Interleaved CCE-to-REG mapping (or distributed CCE-to-REG mapping): 2, 3 or 6 REGs for a given CCE are grouped into one REG bundle, and the REG bundle is interleaved within a CORESET. In a CORESET including one or two OFDM symbols, an REG bundle includes 2 or 6 REGs, and in a CORESET including three OFDM symbols, an REG bundle includes 3 or 6 REGs. An REG bundle size is set on a CORESET basis.

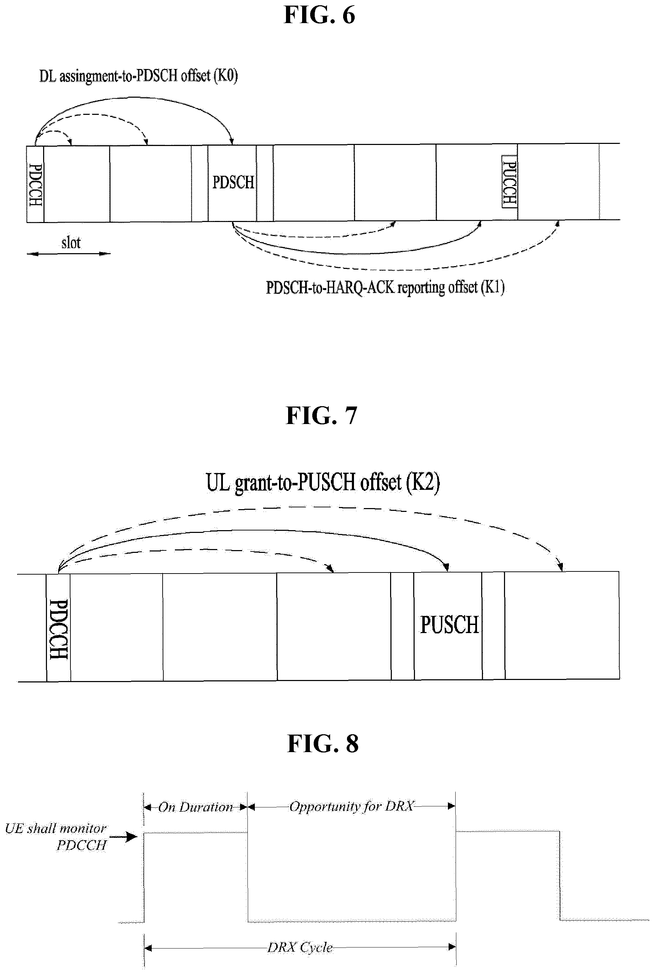

FIG. 6 illustrates an exemplary PDSCH reception and ACK/NACK transmission process. Referring to FIG. 6, the UE may detect a PDCCH in slot #n. The PDCCH includes DL scheduling information (e.g., DCI format 1_0 or DCI format 1_1) and indicates a DL assignment-to-PDSCH offset, K0 and a PDSCH-HARQ-ACK reporting offset, K1. For example, DCI format 1_0 or DCI format 1_1 may include the following information.

- Frequency domain resource assignment: Indicates an RB set allocated to a PDSCH.
- Time domain resource assignment: Indicates K0 (e.g., slot offset), the starting position (e.g., OFDM symbol index) of the PDSCH in slot #n+K0, and the duration (e.g., the number of OFDM symbols) of the PDSCH.
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

FIG. 7 illustrates an exemplary PUSCH transmission procedure. Referring to FIG. 7, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

## Paging

The network may (i) access to UEs in RRC_IDLE, RRC_INACTIVE, and RRC_CONNECTED states by paging messages, and (ii) indicate a system information change and an earthquake and tsunami warning system/commercial mobile alert system (ETWS/CMAS) notification to UEs in the RRC_IDLE and RRC_INACTIVE states and UEs in the RRC_CONNECTED state by short messages. Both a paging message and a short message are transmitted based on a P-RNTI-based PDCCH. The paging message is transmitted on a logical channel, paging control channel (PCCH), whereas the short message is directly transmitted on a physical channel, PDCCH. Because the logical channel, PCCH is mapped to a physical channel, PDSCH, the paging message may be understood as scheduled based on a P-RNTI-based PDCCH.

While the UE stays in the RRC_IDLE state, the UE monitors a paging channel for core network (CN)-initiated paging. In the RRC_INACTIVE state, the UE also monitors the paging channel, for radio access network (RAN)-initiated paging. The UE does not need to monitor the paging channel continuously. Paging discontinuous reception (DRX) is defined as monitoring a paging channel only during one paging occasion (PO) per DRX cycle by a UE in the RRC_IDLE or RRC_INACTIVE state. A paging DRX cycle is configured by the network, as follows.

1) In the case of CN-initiated paging, a default cycle is broadcast in system information.

2) In the case of CN-initiated paging, a UE-specific cycle is configured by NAS signaling.

3) In the case of RAN-initiated signaling, a UE-specific cycle is configured by RRC signaling.

Because all of POs of the UE for CN-initiated signaling and RAN-initiated signaling are based on the same UE ID, the two POs overlap with each other. The number of POs in a DRX cycle may be set by system information, and the network may distribute UEs to the POs based on IDs.

When the UE is in the RRC_CONNECTED state, the UE monitors a paging channel in each paging occasion (PO) signaled by system information, for an SI change indication and a PWS notification. In bandwidth adaptation (BA), the RRC_CONNECTED UE monitors only a paging channel in an active BWP in which a configured CSS is located.

In shared spectrum channel access, additional PDCCH monitoring occasions may be configured in a PO of the UE, for paging monitoring. However, when the UE detects a P-RNTI-based PDCCH transmission in its PO, the UE does not need to monitor subsequent PDCCH monitoring occasions in the PO.

To reduce power consumption, the UE may use DRX in the RRC_IDLE and RRC_INACTIVE states. The UE monitors one PO per DRX cycle. A PO is a set of PDCCH monitoring occasions, and may include multiple time slots (e.g., subframes or OFDM symbols) in which paging DCI may be transmitted. One paging frame (PF) is one radio frame and may include one or more POs or the starting points of one or more POs.

In a multi-beam operation, the UE assumes that the same paging message and the same short message are repeated in all transmission beams. The paging message is the same for both of RAN-initiated paging and CN-initiated paging.

Upon receipt of RAN-initiated paging, the UE initiates an RRC connection resume procedure. Upon receipt of CN-initiated paging in the RRC_INACTIVE state, the UE transitions to the RRC_IDL state and notifies the NAS of the CN-initiated paging.

A PF and a PO for paging are determined in the following manner:

- An SFN for the PF is determined by:

$$(\text{SFN} + \text{PF\_offset}) \bmod \text{T} = (\text{T div N})*(\text{UE\_ID} \bmod \text{N})$$

- An index i_s indicating the index of the PO is determined by:
  i_s = floor(UE_ID/N) mod Ns

The following parameters may be used to calculate the PF and i_s above.

- T: The DRX cycle of the UE (T is determined by the smallest of UE-specific DRX values (if configured by RRC and/or an upper layer) and a default DRX value broadcast in system information. In the RRC_IDLE state, if UE-specific DRX is not configured by an upper layer, the default value is applied).
- N: Number of total paging frames in T
- Ns: Number of POs for a PF
- PF_offset: Offset used for PF determination
- UE_ID: 5G-S-TMSI mod 1024

DRX (Discontinuous Reception)

(1) RRC_CONNECTED DRX

FIG. 8 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC _INACTIVE state. DRX in the RRC_CONNECTED state (RRC_CONNECTED DRX) will be described below.

Referring to FIG. 8, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in an embodiment of the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in an embodiment of the present disclosure. Irrespective of whether DRX is configured, PDCCH monitoring may be restricted during a time period configured as a measurement gap.

Table 5 describes a DRX operation of a UE (in the RRC_CONNECTED state). Referring to Table 5, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the aforedescribed/proposed procedures and/or methods.

[Table 5]

|  | Type of signals | UE procedure |
|---|---|---|
| 1st step | RRC signalling (MAC-CellGroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX. - Value of drx-OnDurationTimer: defines the duration of the starting period of the DRX cycle.

- Value of drx-InactivityTimer: defines the duration of a time period during which the UE is awake after a PDCCH occasion in which a PDCCH indicating initial UL or DL data has been detected
- Value of drx-HARQ-RTT-TimerDL: defines the duration of a maximum time period until a DL retransmission is received after reception of a DL initial transmission.
- Value of drx-HARQ-RTT-TimerDL: defines the duration of a maximum time period until a grant for a UL retransmission is received after reception of a grant for a UL initial transmission.
- drx-LongCycleStartOffset: defines the duration and starting time of a DRX cycle.
- drx-ShortCycle (optional): defines the duration of a short DRX cycle.

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

RRC_IDLE DRX

In the RRC_IDLE and RRC_INACTIVE states, DRX is used to receive a paging signal discontinuously. For simplicity, DRX performed in the RRC_IDLE (or RRC_INACTIVE) state will be referred to as RRC_IDLE DRX.
Therefore, if DRX is configured, PDCCH monitoring/reception may be performed discontinuously in the time domain in performing the above-described/proposed procedures and/or methods are performed.

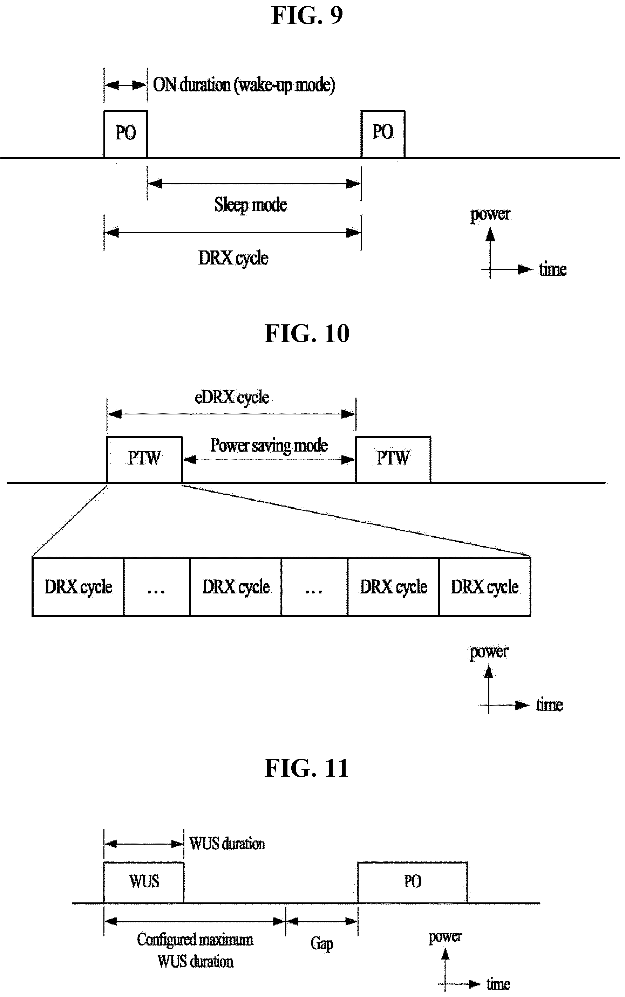

FIG. 9 illustrates an exemplary DRX cycle for paging.
Referring to FIG. 9, DRX may be configured for discontinuous reception of a paging signal. The UE may receive DRX configuration information from the BS by higher-layer (e.g., RRC) signaling. The DRX configuration information may include configuration information related to a DRX cycle, a DRX offset, a DRX timer, and the like. The UE repeats an On duration and a Sleep duration according to the DRX cycle. The UE may operate in a wakeup mode during the On duration and in a sleep mode during the Sleep duration.
In the wakeup mode, the UE may monitor a PO to receive a paging message. A PO means a time resource/interval (e.g., subframe or slot) in which the UE expects to receive a paging message. PO monitoring includes monitoring a PDCCH (MPDCCH or NPDCCH) scrambled with a P-RNTI (hereinafter, referred to as a paging PDCCH) on a PO. The paging message may be included in the paging PDCCH or in a PDSCH scheduled by the paging PDCCH. One or more POs may be included in a paging frame (PF), and the PF may be periodically configured based on a UE ID. A PF may correspond to one radio frame, and the UE ID may be determined based on the International Mobile Subscriber Identity (IMSI) of the UE. When DRX is configured, the UE monitors only one PO per DRX cycle. When the UE receives a paging message indicating a change of its ID and/or system information on a PO, the UE may perform an RACH procedure to initialize (or reconfigure) a connection with the BS, or receive (or obtain) new system information from the BS. Therefore, PO monitoring may be performed discontinuously in the time domain to perform an RACH procedure for connection to the BS or to receive (or obtain) new system information from the BS in the above-described procedures and/or methods.

FIG. 10 illustrates an extended DRX (eDRX) cycle.

According to the DRX cycle configuration, the maximum cycle duration may be limited to 2.56 seconds. However, in the case of a UE that intermittently performs data transmission/reception, such as an MTC UE or an NB-IoT UE, unnecessary power consumption may occur during the DRX cycle. In order to further reduce the power consumption of the UE, a method of significantly extending the DRX cycle based on a power saving mode (PSM) and a paging time window or paging transmission window (PTW) has been introduced. The extended DRX cycle is simply referred to as an eDRX cycle. Specifically, paging hyper-frames (PHs) are periodically configured based on the UE ID, and a PTW is defined in the PHs. The UE may perform a DRX cycle in the PTW duration to switch to the wakeup mode on the PO thereof to monitor the paging signal. One or more DRX cycles (e.g., wake-up mode and sleep mode) of FIG. 9 may be included in the PTW duration. The number of DRX cycles in the PTW duration may be set by the BS through a higher layer (e.g., RRC) signal.

### WUS (Wake-up signal)/PEI (Paging Early Indication)

In LTE Rel-15 Narrowband Internet of Things (NB-IoT) and Machine Type Communication (MTC), a wake-up signal (WUS) was introduced to save power of a UE. The WUS is a signal indicating preliminarily whether there is an actual paging transmission in a paging SS at a specific position. When the BS wants to transmit paging in a PO at a specific position, the BS may transmit a WUS at WUS transmission position(s) associated with the PO. The UE monitors the WUS transmission positions associated with the PO at the specific position. Upon detection of the WUS at the WUS transmission position(s), the UE may expect that paging will be transmitted in the PO, whereas when failing to detect the WUS at the WUS transmission position(s), the UE may not expect paging in the PO. The gain of power saving may be achieved by this operation. In LTE Rel-16 NB-IoT and MTC, a UE-group WUS was introduced to increase the power saving gain of the Rel-15 WUS. The UE-group WUS may advantageously reduce an unnecessary wakeup probability of a UE by using a WUS transmission position and sequence determined based on the UE-group ID of the UE.

FIG. 11 is a diagram illustrating a WUS in an LTE system. Referring to FIG. 11, in MTC and NB-IoT, the WUS may be used to reduce power consumption related to paging monitoring. The WUS is a physical layer signal indicating whether a UE is supposed to monitor a paging signal (e.g., an MPDCCH/NPDCCH scrambled with a P-RNTI) according to a cell configuration. For a UE which is not configured with eDRX (i.e., configured only with DRX), the WUS may be associated with one PO (N=1). On the contrary, for a UE configured with eDRX, the WUS may be associated with one or more POs (N≥1). Upon detection of the WUS, the UE may monitor N POs after being associated with the WUS. When failing to detect the WUS, the UE may maintain sleep mode by skipping PO monitoring until the next WUS monitoring. The UE may receive WUS configuration information from the BS and monitor the WUS based on the WUS configuration information. The WUS configuration information may include, for example, a maximum WUS duration, the number of consecutive POs associated with the WUS, and gap information. The maximum WUS duration may refer to a maximum time period during which the WUS may be transmitted, and may be expressed as a ratio to a maximum repetition number (e.g., Rmax) related to a PDCCH (e.g., MPDCCH or NPDCCH). Although the UE may expect repeated WUS transmissions within the maximum WUS duration, the number of actual WUS transmissions may be less than a maximum number of WUS transmissions within the maximum WUS duration. For example, the number of WUS repetitions may be small for a UE in good coverage. A resource/occasion in which the WUS may be transmitted within the maximum WUS duration is referred to as a WUS resource. The WUS resource may be defined as a plurality of consecutive OFDM symbols by a plurality of consecutive subcarriers. The WUS resource may be defined as a plurality of consecutive OFDM symbols by a plurality of consecutive subcarriers in a subframe or slot. For example, the WUS resource may be defined as 14 consecutive OFDM symbols by 12 consecutive subcarriers. Upon detection of the WUS, the UE does not monitor the WUS until a first PO associated with the WUS. When the WUS is not detected during the maximum WUS duration, the UE does not monitor a paging signal in POs associated with the WUS (or the UE remains in the sleep mode).

In a communication system such as NR, it may be indicated by a paging early indication (PEI) (e.g., a PEI based on a sequence or DCI) whether the UE should monitor paging DCI in a PO or whether paging DCI is provided. When the UE succeeds in detecting the PEI, the UE monitors the paging DCI (and/or a PDSCH carrying a corresponding paging message). When failing in detecting the PEI, the UE may skip monitoring of the paging DCI in the PO.

### Early Termination of On-Duration Timer

In NR, the DRX operation may be used to reduce unnecessary power consumption of the UE. Two DRX structures are defined: a DRX structure for UEs in the RRC_IDLE state and a DRX structure for UEs in the RRC_CONNECTED state. The two DRX structures are designed such that a duration in which the UE expects to receive a DL signal is periodically generated, thereby reducing unnecessary power consumption in other durations. In particular, for C-DRX (e.g., DRX applied to the UE in the RRC_CONNECTED state), the start position of an on-duration is periodically generated according to NR Rel-16 standards. The size of a configurable periodicity (i.e., DRX cycle) may be determined through higher layer parameters provided by the BS to the UE.

When the UE is configured with a C-DRX operation, it is defined to perform key operations, including PDSCH/PUSCH scheduling, during an active time. The method for determining the active time may include a duration during which the on-duration timer starts and is maintained, as well as a duration during which the inactivity timer starts and is maintained. The values of these two timers may be configured based on a DRX group, and according to the 3GPP NR Rel-17 standards, up to two DRX groups may be configured. In the current standard, UE belonging to the same DRX group are defined to share the active time duration. Even for different DRX groups, the UE operations within the active time follow a single set of rules.

In 3GPP, various scenarios and candidate technologies are being discussed to support XR services. XR generally requires a high data rate while satisfying low latency, and at the same time, due to the expected high power consumption of the UE, various power saving techniques are being considered to improve battery efficiency. To prevent unnecessary power consumption of the UE, it is also possible to consider situations where the DRX operation is applied to XR UEs. However, considering the traffic and service characteristics of XR, the existing C-DRX operation may not be efficient. For example, in the case of video traffic for XR services, the occurrence cycle (periodicity) thereof may have non-integer values, and as a result, the cycle may be unsuitable for the existing C-DRX cycle. Additionally, the time consumed to process and generate video traffic may vary each time, which may lead to jittering where the actual time for traffic transmission may fluctuate. The impact of jittering may vary significantly depending on factors such as XR services and the processing capability of a node supporting the XR services. In XR discussed in 3GPP Rel-18, it is assumed that jittering may occur within the range of [-8 ms, 8 ms], and standardization discussions are ongoing. In the C-DRX structure, if the UE fails to receive a PDCCH during the active time, which periodically occurs, the UE may enter the DRX mode. Since the UE is incapable of receiving XR traffic until the next active time starts, the latency may increase significantly. Further, it may even lead to a situation where the delay requirement is not met, resulting in a failure in traffic transmission and reception.

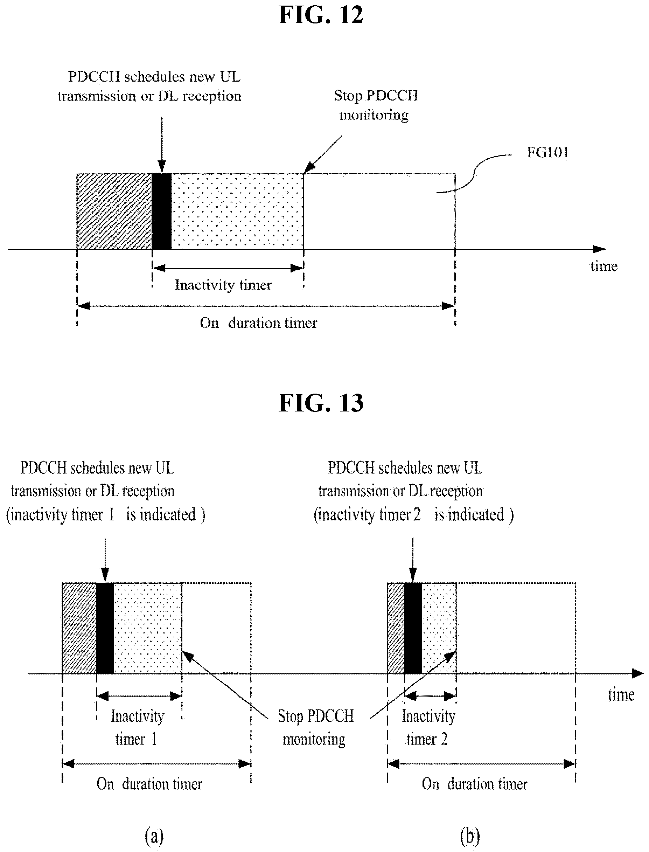

As one method of preventing traffic transmission issues caused by jittering, it may be considered that an on-duration timer (ODT) has a longer duration. The ODT refers to a duration during which the UE may expect to receive a PDCCH. The ODT starts with the C-DRX cycle and may be maintained even if no separate PDCCH reception starts. If a longer duration is configured based on the expected range of jittering, it may prevent missed traffic scheduling. However, the ODT duration may be maintained even if the UE transmits and receives all the necessary traffic. In this case, since the UE needs to continue performing unnecessary PDCCH monitoring, configuring a long ODT duration may be disadvantageous in terms of power consumption. As a method of preventing increases in the power consumption of the UE due to a long ODT duration, terminating the ODT early based on the expiration time of an inactivity timer (IAT) is being discussed in 3GPP Rel-18 XR items. The IAT is a timer that starts based on PDCCH reception when the BS initiates new UL or DL transmission for the UE. The duration of the IAT may also be included in the active time duration. The method being discussed in the XR items is as follows. If the IAT starts within the ODT duration, the active time is maintained within the IAT duration. Once the IAT expires, even if the ODT does not expire, the ODT is terminated. This method may be useful for power saving when the UE expects only a single type of traffic and when it is guaranteed that no further traffic requiring transmission and reception will occur after the active time ends during a single C-DRX cycle. FIG. 12 illustrates an example of the method described above. However, in actual XR services, there may be multiple types of traffic with different traffic characteristics and occurrence periodicities. In addition, a problem may arise when new traffic occurs after the IAT expires, as the opportunity for UL/DL scheduling is missed until the next ODT starts.

To address such an issue, methods of determining early termination conditions of the ODT are proposed along with UE operations therefor. The proposed methods provide a mechanism for the BS to control whether the ODT of the UE is terminated early, thereby achieving the power saving effects for the UE while ensuring the scheduling flexibility of the BS.

The present disclosure primarily describes the C-DRX operations of the UE in the RRC_CONNECTED state in the 3GPP NR system. However, the proposed methods are not limited thereto and may also be applied to other methods where a specific duration, during which the UE does not expect to receive DL signals, is defined with periodicity (e.g., DRX applied to the UE in the RRC_IDLE state). Hereinafter, DRX is used as a general concept that includes C-DRX.

The DRX operation described below is mainly explained based on a structure where the DRX cycle is configured and the start of the active time (i.e., the start position of the on-duration timer) occurs periodically. However, the proposed methods are not limited thereto and may also be applied to DRX operations with non-periodic structures. For example, even when a DRX operation with a non-integer periodicity or a DRX operation where the size of the DRX cycle is expressed in the form of a pattern is used, the principles of the present disclosure may be maintained and applied.

The proposed methods are not limited to the NR transmission and reception forms or the support of XR services, and the proposed methods may be applied to various wireless communication transmission and reception structures and services. Each of the proposed methods may operate independently without any specific combination, or one or more methods may be combined and operate in an interconnected form. Some of the terms, symbols, and sequences used may be replaced by other terms, symbols, or sequences.

Hereinafter, methods by which the ODT may be terminated early based on the expiration time of the IAT are primarily considered. In the following explanation, the term "IAT-based ODT control method" is used to refer to the concept of early termination of the ODT and/or PDCCH monitoring based on the expiration time of the IAT. The terms used are defined for convenience in the explanation, and the proposed methods are not limited to the terms used. If the same or similar concepts are applied, the methods may generally be applied in other cases as well. Alternatively, instead of terminating the ODT early based on the expiration time of the IAT, it may be possible to continue the ODT but stop the PDCCH monitoring starting from the expiration time of the IAT.

**[Proposal 1] Determination of "IAT-based ODT control method" based on information included in DCI**

There is proposed a method of providing information regarding the application status of the "IAT-based ODT control method" through DCI transmitted and received over a PDCCH, which is transmitted by the BS and received by the UE.

When the application of the "IAT-based ODT control method" is indicated by the DCI, the BS and UE may expect operations including the PDCCH monitoring of the UE while one or more IATs are maintained after IATs start within a specific ODT. Once all IATs are terminated (even when the ODT is terminated early or the ODT is not terminated), the PDCCH monitoring may be stopped. If the non-application of the "IAT-based ODT control method" is indicated by the DCI, the BS and UE may expect that the UE will perform general operations in the active time determined by the ODT and IAT, which means that the ODT duration may be maintained regardless of the expiration of the IAT.

Specifically, to provide the information regarding the application status of the "IAT-based ODT control method" through the DCI, one or more of the following options may be used individually or in combination.

(Option 1-1) Configuration of independent DCI field

As one method of providing information regarding the application status of the "IAT-based ODT control method" through DCI, an independent DCI field may be configured, and independent indication information (hereinafter referred to as first indication information) may be provided.

If the independent DCI field is composed of 1 bit, the first indication information may be configured to provide the application status of the "IAT-based ODT control method."

If the independent DCI field is composed of M (>1) bits, the first indication information may be configured to provide the application status of the "IAT-based ODT control method" along with additional information. For example, one of the pieces of information/states represented by the M bits may be used to indicate that the "IAT-based ODT control method" is not applied. Upon receiving the information/state, the UE may be configured not to perform an operation of terminating the ODT based on the expiration of the IAT. Additionally, for example, one or more of the pieces of information/states represented by the M bits may indicate that the "IAT-based ODT control method" is applied, and the length of the applied IAT (hereinafter referred to as a first IAT length) may be provided. In this case, the first IAT length may differ from a generally used IAT length (i.e., an IAT length that may be used when the "IAT-based ODT control method" is not applied). If the first IAT length is indicated, the first IAT length may be configured to be overridden and used instead of information regarding the generally used IAT length.

A DCI format including the independent DCI field for the first indication information may be scheduling DCI. Specifically, the following DCI formats and RNTI values may be used.

- DCI format 0_0/0_2/1_0/1_1/1_2 with CRC scrambled by C-RNTI or CS-RNTI or MCS-C-RNTI
- DCI format 0_2 with CRC scrambled by C-RNTI or CS-RNTI or SP-CSI-RNTI or MCS-C-RNTI

When the scheduling DCI is used, the UE may be configured to determine the application status of the "IAT-based ODT control method" during an ODT or IAT where the scheduling DCI is detected, based on the first indication information provided through the corresponding DCI. In this case, the first indication information may be applied based on the IAT that starts based on the scheduling DCI from which the UE obtains the first indication information, or if there is an IAT that has already started, the first indication information may be applied based on a time at which all ongoing IATs are terminated.

When the scheduling DCI is used and information regarding the first IAT length is provided through the scheduling DCI along with the first indication information, if new UL/DL transmission is scheduled through specific scheduling DCI, the UE may be configured to start the IAT by applying the indicated first IAT length, based on a time when the corresponding scheduling DCI is detected.

FIG. 13 illustrates an exemplary method of providing first indication information and first IAT length information through scheduling DCI. FIG. 13 shows a structure where the length of an IAT is indicated based on information regarding a PDCCH received by the UE, and the indicated IAT length is applied based on a time when the corresponding DCI is received. More specifically, in FIGS. 13 (a) and (b), an ODT is stopped (terminated early) at the expiration time of the IAT, and PDCCH monitoring is stopped from the expiration time of the IAT. In other words, in FIGS. 13 (a) and (b), each piece of scheduling DCI may indicate stopping (early termination of) the ODT/PDCCH monitoring at the expiration time of the IAT (e.g., the first indication information). Additionally, in FIGS. 13 (a) and (b), the lengths of the IAT are inactivity timer 1 and inactivity timer 2, respectively, and the length of the IAT may be provided through the corresponding DCI (e.g., first IAT length information).

A DCI format including the independent DCI field for the first indication information may be non-scheduling DCI. When the non-scheduling DCI is used, information indicated for a specific time duration associated with the corresponding DCI (e.g., first indication information and/or first IAT length information) may be applied.

As a specific example of the non-scheduling DCI, the use of a WUS (i.e., DCI format 2_6 with a CRC scrambled by a PS-RNTI) may be considered. When the WUS is used, the first indication information provided by the WUS may be applied within a duration where the active time, which starts in the duration of an ODT (where the wake-up status is indicated) associated with the corresponding WUS, is maintained. If it is indicated through the WUS that the "IAT-based ODT control method" will be applied, the UE may apply the "IAT-based ODT control method" during the duration of the active time associated with the detected WUS. If it is indicated that the "IAT-based ODT control method" is not applied, the UE may be configured not to apply the "IAT-based ODT control method" during the duration of the active time associated with the detected WUS.

When the WUS is used and the first indication information is provided along with the first IAT length information through the WUS, the UE may be configured to apply the first IAT length indicated for the duration where the active time, which starts in the duration of the ODT associated with the corresponding WUS, is maintained.

To support the "IAT-based ODT control method" using the WUS, the BS may inform the UE of the position of bit(s) on DCI format 2_6, where the first indication information and/or first IAT length information may be obtained, via UE-dedicated RRC signaling. Based on the received information, the UE may monitor the WUS and receive information regarding the "IAT-based ODT control method."

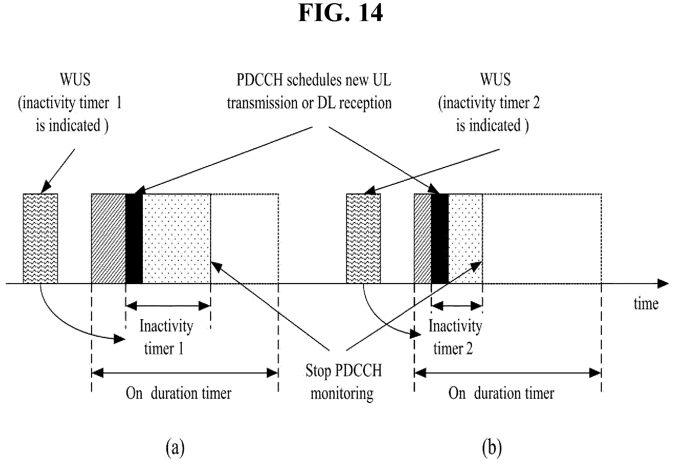

FIG. 14 illustrates an exemplary method of providing first indication information and first IAT length information through non-scheduling DCI using a WUS. FIG. 14 shows a structure where the length of an IAT is indicated based on information in a WUS received by the UE, and the indicated IAT length is applied to the duration of the active time associated with the WUS. More specifically, in FIGS. 14 (a) and (b), an ODT is stopped (terminated early) at the expiration time of the IAT, and PDCCH monitoring is stopped from the expiration time of the IAT. In other words, in FIGS. 13 (a) and (b), each WUS may instruct to stop (terminate early) the ODT/PDCCH monitoring at the expiration time of the IAT (e.g., the first indication information). Additionally, in FIGS. 14 (a) and (b), the lengths of the IAT are inactivity timer 1 and inactivity timer 2, respectively, and the length of the IAT may be provided through each WUS (e.g., first IAT length information).

The method of providing the first IAT length information through the DCI among the proposed methods may be used independently. For example, for specific pieces of DCI (e.g., scheduling DCI and/or non-scheduling DCI), an independent DCI field of M bits may be configured to provide the first IAT length information. In this case, the states of the DCI field represented by the M bits may be used to indicate up to 2M different IAT lengths, and one of the states may be used to indicate that the generally used IAT length is maintained as it is. This method may be applied even when the "IAT-based ODT control method" is not applied. Alternatively, when the information regarding the "IAT-based ODT control method" is provided independently from the DCI field that provides the first IAT length information (e.g., when the "IAT-based ODT control method" is semi-statically configured and applied by RRC, or when the information is provided by other DCI or by another DCI field within the same DCI), the method may be applied.

(Option 1-2) Method based on HARQ process number indicated through scheduling DCI

As one method of providing information regarding the application status of the "IAT-based ODT control method" through DCI, a HARQ process number (HPN) indicated through scheduling DCI may be used, and indication information determined by the indicated HPN (hereinafter referred to as second indication information) may be provided.

Specifically, the second indication information may be provided as follows. HPNs that the UE may expect to receive may be divided into two sets. If an HPN belonging to the first HPN set is indicated by DCI, it means that the "IAT-based ODT control method" is applied. If an HPN belonging to the second HPN set is indicated by DCI, it means that the "IAT-based ODT control method" is not applied. A method of configuring the first HPN set and the second HPN set may be predefined by the standard or configured to the UE through UE-dedicated RRC signaling. In this case, it may be allowed for the HPN sets to be configured differently for UL grants and DL grants. This is because the number of HPNs used for UL and DL may differ. If the characteristics of UL traffic and DL traffic differ, it may be advantageous to configure the HPN sets according to the specific characteristics of each traffic type.

As another method of providing the information based on the HPN indicated through the scheduling DCI, the length of an IAT which is started by the corresponding DCI according to the indicated HPN (hereinafter referred to as second IAT length information) may be determined. Specifically, the IAT values corresponding to each HPN may be predefined by the standard or configured through UE-dedicated RRC signaling. In this case, different IAT values may be configured for each HPN. The configuration of the IAT values corresponding to each HPN may be applied to all HPNs.

Alternatively, the configuration may be applied only to some of the HPNs that the UE may expect, and for the remaining HPNs, the general IAT value (i.e., IAT value not affected by the second IAT length information) may be used. When the proposed method is applied, if new UL/DL transmission is scheduled through the scheduling DCI received by the UE and the start conditions for the IAT are satisfied, the UE may acquire information regarding the length of the IAT starting from a time when the DCI is received, based on the HPN value indicated in the received DCI and apply the information.

The method of providing the second IAT length information through the HPN may be used independently or in combination with the provision of the second indication information.

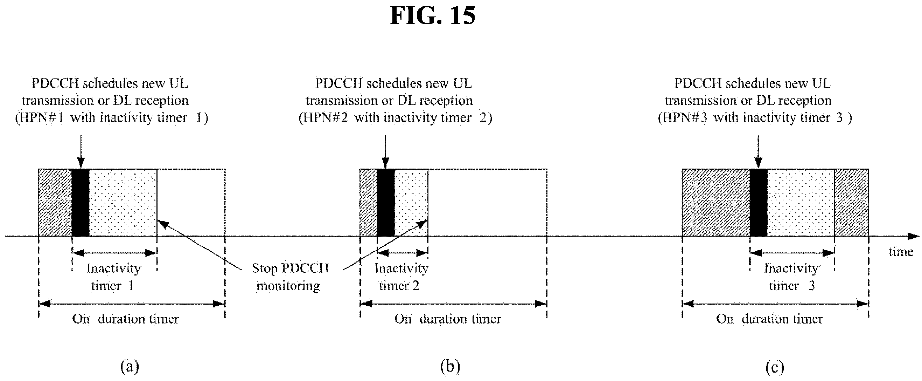

FIG. 15 illustrates an example of the proposed method. FIGS. 15 (a) and (b) show a structure where the "IAT-based ODT control method" is applied based on second indication information determined by an HPN of scheduling DCI, and the value of an IAT determined by the indicated HPN is reflected. Additionally, FIG. 15 (c) shows a structure where the "IAT-based ODT control method" is not applied based on the second indication information determined by the HPN of the scheduling DCI, but the IAT value determined by the indicated HPN is still reflected. More specifically, in FIGS. 15 (a) and (b), an ODT is stopped (terminated early) at the expiration time of the IAT, and PDCCH monitoring is stopped from the expiration time of the IAT. In FIG. 15 (c), the ODT continues even after the IAT expiration, and PDCCH monitoring is performed from the IAT expiration point until the ODT is terminated. In FIGS. 15 (a), (b), and (c), the lengths of the IAT are inactivity timers 1, 2, and 3, respectively, and the IAT lengths may be indicated through an HPN field. For example, if the HPN field is set to HPN#1, inactivity timer 1 is applied. If the HPN field is set to HPN#2, inactivity timer 2 is applied. If the HPN field is set to HPN#3, inactivity timer 3 is applied. For example, HPN#1 and HPN#2 may belong to the first HPN set, while HPN#3 may belong to the second HPN set.

## [Proposal 21 Determination of "IAT-based ODT control method" through information included in MAC CE

According to an embodiment, there is provided a method of providing information regarding the application status of the "IAT-based ODT control method" through a MAC CE transmitted and received over a PDSCH, which is transmitted by the BS and received by the UE (hereinafter referred to as third indication information).

When the application of the "IAT-based ODT control method" is indicated by the MAC CE, the BS and UE may expect operations including the PDCCH monitoring of the UE while one or more IATs are maintained after IATs start within a specific ODT. Once all IATs are terminated, the PDCCH monitoring may be stopped. If the non-application of the "IAT-based ODT control method" is indicated by the DCI, the BS and UE may expect that the UE will perform general operations in the active time determined by the ODT and IAT, which means that the ODT duration may be maintained regardless of the expiration of the IAT.

Specifically, a method of defining an IAT expire command MAC CE and identifying the IAT expire command MAC CE with a logical channel ID (LCID) may be used. For example, the UE may apply the "IAT-based ODT control method" only when the UE identifies the LCID for the IAT expire command MAC CE. If the LCID is not identified, the method may not be applied. Alternatively, multiple LCIDs may be specified for the IAT expire command MAC CE, and different IAT values may be applied to each LCID. In this case, if the UE receives one of the LCIDs for the IAT expire command MAC CE, the UE may confirm that the "IAT-based ODT control method" may be applied. At the same time, the UE may determine an IAT value to apply based on the received LCID value.

In the proposed method, the UE may assume that the application of the IAT will start, based on a PDCCH that schedules a PDSCH on which the MAC CE providing the third indication information is transmitted. This may be for the purpose of providing the same structure as that for the operation of the general IAT.

As another method of achieving the same or similar effects provided by the proposed method, provided is a method of extending the functionality of the existing DRX command MAC CE and operating a new DRX command MAC CE (hereinafter referred to as a third DRX command MAC CE). Specifically, the third DRX command MAC CE is defined and identified through an LCID. When the UE receives the LCID for the third DRX command MAC CE, the UE may start a timer of a specific size (hereinafter referred to as a third timer) based on the reception time of a PDSCH on which the MAC CE is received or the transmission time of a HARQ-ACK for the PDSCH. Once the third timer expires, the UE may terminate the entire active time including the ODT and IAT and enter the DRX state. The size of the third timer may be defined by the standard or has a value indicated in UE-dedicated RRC signaling transmitted by the BS. Alternatively, multiple LCIDs for the third DRX command MAC CE may be specified, and different third timer values may be applied to each LCID. When the UE receives one of the LCIDs for the third DRX command MAC CE, the UE may determine the third timer value to apply based on the received LCID value and start the third timer from a reference time.

## [Proposal 31 Determination of application/indication status of "IAT-based ODT control method" depending on conditions

According to an embodiment, there is provided a method of limiting the application and indication status of the "IAT-based ODT control method" to cases where specific conditions are satisfied. The specific conditions may be one of the following options or a combination of two or more of the following options.

(Option 3-1) Method of determining application and indication status based on DCI format

Proposed is a method of determining whether the "IAT-based ODT control method" is used based on the DCI format or a method of providing information regarding the "IAT-based ODT control method" in a different manner. This is to appropriately support the "IAT-based ODT control method," considering that the purpose and characteristics of each DCI format are different. Specifically, one or more of the methods described below may be combined and used. These methods may be defined by the standard or supported through a process where the BS configures and provides the UE with necessary information via DL transmission such as RRC signaling.

As one method, it may be defined that the "IAT-based ODT control method" is supported for specific DCI formats, while the "IAT-based ODT control method" is not supported for other DCI formats.

As one method for not supporting the "IAT-based ODT control method" for some DCI formats, the application status of the "IAT-based ODT control method" based on scheduling DCI may be indicated only by a DCI format that schedules a DL grant, while indication information is not provided by a UL grant. Specifically, for the DCI format that schedules the DL grant, an explicit bit field to support the "IAT-based ODT control method" may be configured, or the application status of the "IAT-based ODT control method" may be interpreted based on another DCI field. Alternatively, if new DL transmission is scheduled by the DCI and the conditions for starting an IAT are satisfied, the "IAT-based ODT control method" may be implicitly applied. For the DCI format that schedules the UL grant, an explicit bit field to support the "IAT-based ODT control method" may not be configured, or the application status of the "IAT-based ODT control method" may not be interpreted based on another DCI field. Additionally, even if new UL transmission is scheduled by the DCI and the conditions for starting an IAT are satisfied, the "IAT-based ODT control method" based on the IAT may not be initiated. This method may be suitable for the purpose of preventing the loss of DL traffic scheduling opportunities when the active time is terminated by UL transmission, considering cases where for DL grants, the BS and the service provider predict the occurrence of DL traffic and also considering cases where the priority of transmitted DL traffic is high or the jittering of UL traffic is low.

As another method for not supporting the "IAT-based ODT control method" for some DCI formats, the "IAT-based ODT control method" based on scheduling DCI may be defined to differentiate the application status and support methods between non-fallback DCI formats and fallback DCI formats. For example, the method of using an independent DCI field for the "IAT-based ODT control method" described in Option 1-1 of Proposal 1 may be applied only to non-fallback DCI formats. For fallback DCI formats, it may be specified that an independent DCI field is not used. This can be useful, considering that adding additional bits may not be suitable for fallback DCI formats with constraints in the number of DCI bits.

As another method, for specific DCI formats, it may be defined that the application status of the "IAT-based ODT control method" is indicated based on special conditions (e.g., Proposal 1 or Proposal 2). For other specific DCI formats, it may be defined that the "IAT-based ODT control method" is always applied based on detection of the DCI formats. Alternatively, in the case of scheduling DCI formats, if new UL/DL transmission is indicated, the "IAT-based ODT control method" may be always applied. For example, for non-fallback DCI formats, the "IAT-based ODT control method" may be determined only when special conditions are satisfied. For fallback DCI formats, the "IAT-based ODT control method" may be applied regardless of special conditions, or when new IAT start conditions are satisfied. This method may be used when it is not suitable to configure independent DCI fields or when it is necessary to prevent information loss due to the use of additional information (e.g., avoiding throughput reduction caused by differentiating the purpose of using the HPN). The method of defining and using the third DRX command MAC CE may be combined with other IAT-based methods proposed in the present disclosure. In this case, the concept of the third timer may be used in correspondence with the IAT value.

(Option 3-2) **Determination** of application and indication status based on RNTI

Proposed is a method of determining whether the "IAT-based ODT control method" is used or a method of providing information regarding the "IAT-based ODT control method" in a different manner, based on RNTI values used for CRC scrambling for DCI formats. This method is intended to appropriately support the "IAT-based ODT control method," considering that even the same DCI format may be used for different purposes and have different characteristics. Specifically, one or more of the methods described below may be combined and used. The methods may be defined by the standard or supported through a process where the BS configures and provides necessary information to the UE via DL transmission such as RRC signaling.

As one method, for scheduling DCI, if a C-RNTI or MCS-C-RNTI is applied, the application of the "IAT-based ODT control method" may be allowed. However, if a CS-RNTI or SP-CSI-RNTI is used, the application of the "IAT-based ODT control method" may not be allowed. The CS-RNTI may be used for controlling the activation/deactivation or retransmission of scheduling of periodic DL/UL transmission such as for SPS or CG. The SP-CSI-RNTI may be used for controlling the activation/deactivation of semi-persistent CSI reporting on a PUSCH. There is a difference in purpose between the C-RNTI, which is used for the dynamic scheduling of DL/UL grants, and the MCS-C-RNTI. Considering that the intention of the "IAT-based ODT control method" is to consider the characteristics of traffic patterns occurring at the C-DRX cycle, DCI formats using the CS-RNTI or SP-CSI-RNTI may not align with the purpose of the "IAT-based ODT control method."

(Option 3-3) Determination of application and indication status for each cell

Proposed is a method of differentiating between cells where the active time is maintained based on the "IAT-based ODT control method" and cells where the active time is not maintained. Specifically, when a specific UE is configured to apply the "IAT-based ODT control method," and when the termination of the active time including an ODT is indicated after an IAT expires based on specific conditions, even if the ODT duration remains after the expiration of the IAT, it may be defined that the active time is not terminated and is maintained for some pre-designated cells. For example, the pre-designated cells may be predefined by the standard (e.g., PCell and/or PSCell) or determined through a process where the BS configures and provides information to the UE via DL transmission such as RRC signaling. This method may be used to prevent issues such as increases in latency that may arise when the "IAT-based ODT control method" is applied and the active time is terminated and to allow continuous PDCCH monitoring for at least a minimal set of cells.

(Option 3-4) Determination of application and indication status based on SSSG

Proposed is a method of determining whether the "IAT-based ODT control method" is used based on an SSSG the UE may expect to receive and/or a method of performing associated operations in a different manner when SSSG switching is supported. Specifically, it may be defined that during a duration where the UE is indicated or maintaining specific SSSG(s) (hereinafter referred to as a first SSSG), operations based on the "IAT-based ODT control method" are supported. For a duration where other SSSGs (hereinafter referred to as a second SSSG) are indicated or maintained, it may be defined that the "IAT-based ODT control method" is not supported. The support of the above operation means that the UE may determine whether specific conditions are met (e.g., satisfaction of IAT start conditions or reception of indication information provided through DCI/MAC CE), and based on the determination, the UE may determine the application of the "IAT-based ODT control method." In the case of carrier aggregation (CA), if the UE is instructed to apply the "IAT-based ODT control method" from a different cell, the operations based on the "IAT-based ODT control method" may be performed unless there are specific restrictions.

As a specific method for supporting the operation, while the first SSSG is indicated or maintained, if new UL/DL transmission is scheduled and the IAT start conditions are satisfied, it may be defined that the UE applies the "IAT-based ODT control method" without requiring any additional information. Conversely, while the second SSSG is indicated or maintained, even if the IAT start conditions are satisfied, the "IAT-based ODT control method" may be configured not to be applied. This method has the advantage of enabling implicit operation indications based on an SSSG, without adding an independent DCI field for supporting the "IAT-based ODT control method" or causing significant signaling overhead for information provision.

As another specific method for supporting the operation, while the first SSSG is indicated or maintained, only if new UL/DL transmission is scheduled, the IAT start conditions are satisfied, and additional information is provided, the UE may be configured to apply the "IAT-based ODT control method." In all other cases, even if the IAT start conditions are satisfied, the "IAT-based ODT control method" may be configured not to be applied. This method may provide advantageous effects in that the method allows the BS to primarily control the application status of the "IAT-based ODT control method" using the SSSG, while simultaneously controlling the application of the "IAT-based ODT control method" without being affected by SSSG switching application delays.

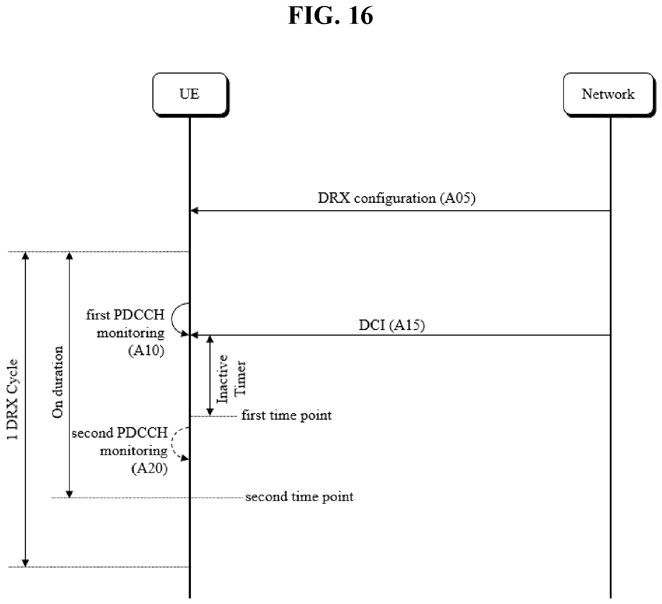

FIG. 16 is a diagram for explaining signal transmission and reception in a network system according to an embodiment.

Referring to FIG. 16, a network may determine a DRX configuration and provide the DRX configuration to a UE (A05). The DRX configuration may include information about an on-duration timer.

Based on the DRX configuration, the UE may monitor at least one PDCCH during the on duration of each DRX cycle.

Specifically, the on duration may be determined based on the on-duration timer, and the UE may monitor a first PDCCH based on the running of the on-duration timer (A10). The network may transmit DCI to the UE over the first PDCCH based on the running of the on-duration timer (A15).

Based on the DCI (A15), an inactivity timer may be started. The DCI (A15) may include information about the length of the inactivity timer. The length of the inactivity timer may be a duration from the reception time of the DCI (A15) to a first time point.

Based on the DCI, the network may indicate whether the UE needs to monitor a second PDCCH (A20) from the first time point, when the inactivity timer expires, to a second time point, when the on-duration timer expires. The UE may determine whether to monitor the second PDCCH from the first time point to the second time point based on the DCI.

For example, if the on-duration timer is terminated early at the first time point, the UE may skip monitoring the second PDCCH (A20). Alternatively, if the on-duration timer continues to run until the second time point, the UE may perform monitoring of the second PDCCH (A20).

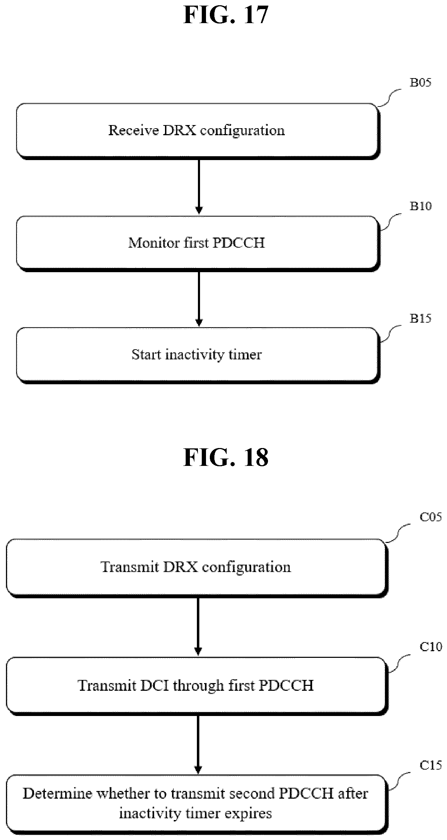

FIG. 18 is a diagram for explaining signal transmission of a BS according to an embodiment.

Referring to FIG. 18, the BS may transmit a DRX configuration including information regarding an on-duration timer to a UE (C05).

Based on the running of the on-duration timer, the BS may transmit DCI to the UE over a first PDCCH (C10). Based on the transmission of the DCI, an inactivity timer may be started. The inactivity timer may expire before the on-duration timer.

Based on the DCI, the BS may determine whether to transmit a second PDCCH, following the first PDCCH, to the UE from a first time point when the inactivity timer expires to a second time point when the on-duration timer expires (C15).

The BS may terminate the on-duration timer early at the first time point by configuring first information included in the DCI to a first value.

Based on that the first information included in the DCI is set to the first value, the BS may determine not to transmit the second PDCCH from the first time point to the second time point.

Based on that the first information included in the DCI is set to a second value, the BS may transmit the second PDCCH from the first time point to the second time point.

The DCI may include information regarding the length of the inactivity timer.

The length of the inactivity timer may be a duration from the reception time of the DCI to the first time point.

Based on at least one of a DCI format, an RNTI, and an SSSG related to the DCI, the BS may determine whether to transmit the second PDCCH to the UE from the first time point to the second time point.

The BS may transmit information regarding at least one of the DCI format, the RNTI, and the SSSG through RRC signaling.

Based on an HPN field included in the DCI, the BS may instruct at least one of the length of the inactivity timer or the transmission status of the second PDCCH.

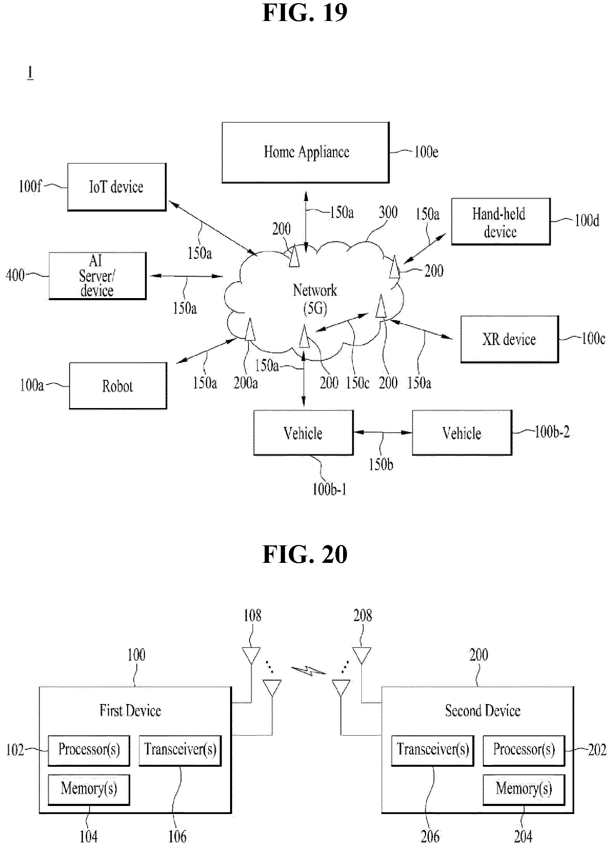

FIG. 19 illustrates a communication system 1 applied to the present disclosure.

Referring to FIG. 19, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 19 illustrates wireless devices applicable to the present disclosure.

Referring to FIG. 19, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 19.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 19 illustrates another example of a wireless device applied to the present disclosure. The wireless device may be implemented in various forms according to a use-case/service (refer to FIG. 19).

Referring to FIG. 19, wireless devices 100 and 200 may correspond to the wireless devices 100 and 200 of FIG. 19 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 19. For example, the transceiver(s) 114 may include the one or more transceivers 106 and 206 and/or the one or more antennas 108 and 208 of FIG. 19. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 19), the vehicles (100b-1 and 100b-2 of FIG. 19), the XR device (100c of FIG. 19), the hand-held device (100d of FIG. 19), the home appliance (100e of FIG. 19), the IoT device (100f of FIG. 19), a digital broadcast terminal, a hologram device, a public safety device, an MTC device, a medicine device, a fintech device (or a finance device), a security device, a climate/environment device, the AI server/device (400 of FIG. 19), the BSs (200 of FIG. 19), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 19 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 19, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features may be implemented in a form failing to be combined with other elements or features. Moreover, it is able to implement an embodiment of the present disclosure by combining elements and/or features together in part. A sequence of operations explained for each embodiment of the present disclosure may be modified. Some configurations or features of an embodiment may be included in another embodiment or may be substituted for corresponding configurations or features of another embodiment. And, an embodiment may be configured by combining claims failing to have relation of explicit citation in the appended claims together or may be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes

EP 4 615 154 A1

coming within the meaning and equivalency range of the appended claims are intended to be embraced therein.

**INDUSTRIAL APPLICABILITY**

The present disclosure is applicable to UEs, BSs, or other apparatuses in a wireless mobile communication system.

**Claims**

1.   A method of receiving a signal by a user equipment (UE) in a wireless communication system, the method comprising:

receiving a discontinuous reception (DRX) configuration comprising information regarding an on-duration timer, monitoring a first physical downlink control channel (PDCCH) based on running of the on-duration timer, and starting an inactivity timer based on downlink control information (DCI) detected through the monitoring of the first PDCCH,
wherein the inactivity timer expires earlier than the on-duration timer, and
wherein the UE determines, based on the DCI, whether to monitor a second PDCCH subsequent to the first PDCCH from a first time point at which the inactivity timer expires to a second time point at which the on-duration timer expires.

2.   The method of claim 1, wherein based on that first information included in the DCI is set to a first value, the UE early terminates the on-duration timer at the first time point.

3.   The method of claim 1, wherein based on that first information included in the DCI is set to a first value, the UE skips monitoring of the second PDCCH from the first time point to the second time point.

4.   The method of claim 1, wherein based on that first information included in the DCI is set to a second value, the UE monitors the second PDCCH from the first time point to the second time point.

5.   The method of claim 1, wherein the DCI comprises information regarding a length of the inactivity timer.

6.   The method of claim 5, wherein the length of the inactivity timer is a duration from a time point of receiving the DCI to the first time point.

7.   The method of claim 1, wherein the UE determines whether to monitor the second PDCCH from the first time point to the second time point, based on at least one of a DCI format, a radio network temporary identifier (RNTI), or a search space set group (SSSG), which are related to the DCI.

8.   The method of claim 7, further comprising:
receiving information regarding the at least one of the DCI format, the RNTI, or the SSSG, which are related to whether the second PDCCH is to be monitored, through radio resource control (RRC) signaling.

9.   The method of claim 1, wherein the UE determines at least one of a length of the inactivity timer and whether to monitor the second PDCCH, based on a hybrid automatic repeat request (HARQ) process number field included in the DCI.

10.   A computer-readable recording medium having recorded thereon a program for executing the method of claim 1.

11.   A device for wireless communication, the device comprising:

a memory configured to store instructions; and
a processor configured to perform operations by executing the instructions,
wherein the operations of the processor comprise:

receiving a discontinuous reception (DRX) configuration comprising information regarding an on-duration timer;
monitoring a first physical downlink control channel (PDCCH) based on running of the on-duration timer; and
starting an inactivity timer based on downlink control information (DCI) detected through the monitoring of the

23

first PDCCH,

wherein the inactivity timer expires earlier than the on-duration timer, and

wherein whether a second PDCCH subsequent to the first PDCCH is to be monitored from a first time point at which the inactivity timer expires to a second time point at which the on-duration timer expires is determined based on the DCI.

12. The device of claim 11, further comprising:

a transceiver configured to transmit or receive wireless signals under control of the processor,

wherein the device is a user equipment (UE) operating in a wireless communication system.

13. The device of claim 11, wherein the device is a processing device configured to control a user equipment (UE) operating in a wireless communication system.

14. A method of transmitting a signal by a base station (BS) in a wireless communication system, the method comprising:

transmitting a discontinuous reception (DRX) configuration comprising information regarding an on-duration timer to a user equipment (UE); and

transmitting downlink control information (DCI) to the UE over a first physical downlink control channel (PDCCH) based on running of the on-duration timer,

wherein an inactivity timer is started based on the transmission of the DCI,

wherein the inactivity timer expires earlier than the on-duration timer, and

wherein whether a second PDCCH subsequent to the first PDCCH is to be transmitted from a first time point at which the inactivity timer expires to a second time point at which the on-duration timer expires is determined based on the DCI.

15. A base station (BS) for wireless communication, the BS comprising:

a memory configured to store instructions; and

a processor configured to perform operations by executing the instructions,

wherein the operations of the processor comprise:

transmitting a discontinuous reception (DRX) configuration comprising information regarding an on-duration timer to a user equipment (UE); and

transmitting downlink control information (DCI) to the UE over a first physical downlink control channel (PDCCH) based on running of the on-duration timer,

wherein an inactivity timer is started based on the transmission of the DCI,

wherein the inactivity timer expires earlier than the on-duration timer, and

wherein whether a second PDCCH subsequent to the first PDCCH is to be transmitted from a first time point at which the inactivity timer expires to a second time point at which the on-duration timer expires is determined based on the DCI.

# FIG. 1

Initial Cell Search — System Information Reception — Random Access Procedure — General DL/UL Tx/Rx S108

PSS/SSS & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH

S101    S102    S103    S104    S105    S106    S107    • DL/UL ACK/NACK
• UE CQI/PMI/Rank Report using PUSCH and PUCCH

# FIG. 2

One Frame (10ms)

Half-Frame (5ms) | Half-Frame (5ms)

Subframe 0 (1ms) | Subframe 4 (1ms) | Subframe 5 (1ms) | Subframe 9 (1ms)

Subframe (1ms)

15KHz | Slot (14 symbols)
1ms

30KHz | Slot 0 (14 symbols) | Slot 1
500us

60KHz | Slot 0 (14 symbols) | Slot 1 | Slot 2 | Slot 3
250us

120KHz | Slot 0 (14 symbols) | Slot 1 | Slot 2 | Slot 3 | Slot 4 | Slot 5 | Slot 6 | Slot 7
125us

# FIG. 3

Resource grid

A carrier
(up to 3300 subcarriers, i.e., 275 RBs)

A BWP

1 RB = 12 subcarriers

1 RE

1 subcarrier

1 symbol

# FIG. 4

# FIG. 5

## FIG. 6

DL assingment-to-PDSCH offset (K0)

PDCCH PDSCH PUCCH

slot

PDSCH-to-HARQ-ACK reporting offset (K1)

## FIG. 7

UL grant-to-PUSCH offset (K2)

PDCCH PUSCH

## FIG. 8

On Duration — Opportunity for DRX

UE shall monitor PDCCH

DRX Cycle

# FIG. 9

ON duration (wake-up mode)

PO                                    PO

Sleep mode

power

time

DRX cycle

# FIG. 10

eDRX cycle

Power saving mode

PTW                                    PTW

| DRX cycle | ... | DRX cycle | ... | DRX cycle | DRX cycle |

power

time

# FIG. 11

WUS duration

WUS                                    PO

Configured maximum    Gap
WUS duration

power

time

# FIG. 12

PDCCH schedules new UL
transmission or DL reception

Stop PDCCH
monitoring

FG101

Inactivity timer

On duration timer

time

# FIG. 13

PDCCH schedules new UL
transmission or DL reception
(inactivity timer 1 is indicated )

PDCCH schedules new UL
transmission or DL reception
(inactivity timer 2 is indicated )

Inactivity
timer 1

Stop PDCCH
monitoring

Inactivity
timer 2

On duration timer

On duration timer

time

(a)

(b)

# FIG. 14

WUS
(inactivity timer 1
is indicated )

PDCCH schedules new UL
transmission or DL reception

WUS
(inactivity timer 2
is indicated )

Inactivity
timer 1

Stop PDCCH
monitoring

Inactivity
timer 2

On duration timer

On duration timer

time

(a)

(b)

## FIG. 15

PDCCH schedules new UL
transmission or DL reception
(HPN#1 with inactivity timer 1)

PDCCH schedules new UL
transmission or DL reception
(HPN#2 with inactivity timer 2)

PDCCH schedules new UL
transmission or DL reception
(HPN#3 with inactivity timer 3 )

Stop PDCCH
monitoring

Inactivity
timer 1

Inactivity
timer 2

Inactivity
timer 3

On duration timer

On duration timer

On duration timer

time

(a)

(b)

(c)

# FIG. 16

# FIG. 17

Receive DRX configuration — B05

Monitor first PDCCH — B10

Start inactivity timer — B15

# FIG. 18

Transmit DRX configuration — C05

Transmit DCI through first PDCCH — C10

Determine whether to transmit second PDCCH after inactivity timer expires — C15

EP 4 615 154 A1

# FIG. 19

<u>1</u>

# FIG. 20

35

EP 4 615 154 A1

# FIG. 21

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 22

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108

208

Device (100, 200)

Communication unit (210)

Control unit (220)

Memory unit (230)

Driving unit (140a)

Power supply unit (140b)

Sensor unit (140c)

Autonomous driving unit (140d)

**EP 4 615 154 A1**

## INTERNATIONAL SEARCH REPORT

| International application No. |
|---|
| **PCT/KR2023/016903** |

### A. CLASSIFICATION OF SUBJECT MATTER

**H04W 76/28**(2018.01)i; **H04W 72/23**(2023.01)i; **H04W 52/02**(2009.01)i; **H04L 1/18**(2006.01)i

According to International Patent Classification (IPC) or to both national classification and IPC

### B. FIELDS SEARCHED

Minimum documentation searched (classification system followed by classification symbols)

H04W 76/28(2018.01); H04W 52/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: on-duration 타이머(timer), DRX(discontinuous reception), DCI(downlink control information), PDCCH, 비활성 타이머(inactivity timer), 만료(expiration), 탐색 공간 세트 그룹(search space set group, SSSG), RNTI, RRC, HARQ 프로세스 번호 필드(process number field), 조기(early)

### C. DOCUMENTS CONSIDERED TO BE RELEVANT

| Category* | Citation of document, with indication, where appropriate, of the relevant passages | Relevant to claim No. |
|---|---|---|
| X<br>Y | HUAWEI et al. Discussion on XR-specific power saving techniques. R1-2208420, 3GPP TSG RAN WG1 Meeting #110bis-e, e-Meeting. 30 September 2022.<br>See sections 2.1, 2.2.1-2.2.2, 2.3 and 3.1.1-3.1.2; and figure 9. | 1-2,4,7-8,10-15<br>3,5-6,9 |
| Y | MODERATOR (QUALCOMM INCORPORATED). Moderator Summary #2 on XR specific power saving techniques. R1-2207832, 3GPP TSG RAN WG1 #110. Toulouse, France. 28 August 2022.<br>See pages 4, 36 and 39. | 3,5-6,9 |
| A | MEDIATEK INC. C-DRX enhancements for XR. R2-2211860, 3GPP TSG-RAN WG2 Meeting #120. Toulouse, France. [Online]. 04 November 2022.<br>See sections 2.1-2.5. | 1-15 |
| A | QUALCOMM INCORPORATED. Power Saving Techniques for XR. R1-2210002, 3GPP TSG RAN WG1 Meeting #110bis-e, e-Meeting. 30 September 2022.<br>See sections 3.1-3.3 and 4.1-4.2. | 1-15 |

☑ Further documents are listed in the continuation of Box C.     ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **15 February 2024** | **15 February 2024** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/016903** |

### C.    DOCUMENTS CONSIDERED TO BE RELEVANT

| Category* | Citation of document, with indication, where appropriate, of the relevant passages | Relevant to claim No. |
| --- | --- | --- |
| A | US 2022-0232477 A1 (QUALCOMM INCORPORATED) 21 July 2022 (2022-07-21)<br>See paragraphs [0089]-[0112]; and figures 4A-12. | 1-15 |

Form PCT/ISA/210 (second sheet) (July 2022)

**INTERNATIONAL SEARCH REPORT**
Information on patent family members

| | International application No. |
|---|---|
| | **PCT/KR2023/016903** |

| Patent document cited in search report | Publication date (day/month/year) | Patent family member(s) | | | Publication date (day/month/year) |
|---|---|---|---|---|---|
| US 2022-0232477 A1 | 21 July 2022 | CN | 116686347 | A | 01 September 2023 |
| | | EP | 4278710 | A1 | 22 November 2023 |
| | | WO | 2022-154972 | A1 | 21 July 2022 |

Form PCT/ISA/210 (patent family annex) (July 2022)